# EUROPÄISCHE PATENTSCHRIFT

(11) **EP 2 769 117 B1**
(45) Veröffentlichungstag und Bekanntmachung des Hinweises auf die Patenterteilung: **20.07.2016**
(21) Anmeldenummer: 12770060.7
(22) Anmeldetag: 26.09.2012
(51) Int. Cl.: F16F 15/14, F16F 15/131, F16H 45/02

(54) **DREHSCHWINGUNGSDÄMPFUNGSANORDNUNG, INSBESONDERE FÜR DEN ANTRIEBSSTRANG EINES FAHRZEUGS**
TORSIONAL VIBRATION DAMPING ASSEMBLY, IN PARTICULAR FOR THE DRIVE TRAIN OF A VEHICLE
DISPOSITIF D'AMORTISSEMENT DE VIBRATIONS DE ROTATION, EN PARTICULIER POUR LA CHAÎNE CINÉMATIQUE D'UN VÉHICULE

(30) Priorität: 19.10.2011 DE 102011084742
(43) Veröffentlichungstag der Anmeldung: 27.08.2014
(73) Patentinhaber: ZF Friedrichshafen AG, 88038 Friedrichshafen (DE)
(72) Erfinder: WEIGAND, Thomas, 97421 Schweinfurt (DE); LORENZ, Daniel, 97688 Bad Kissingen (DE); CARLSON, Cora, 97456 Dittelbrunn (DE)
(86) Internationale Anmeldenummer: PCT/EP2012/068898
(87) Internationale Veröffentlichungsnummer: WO 2013/056949

(56) Entgegenhaltungen:
- WO-A1-2011/147633
- WO-A1-2012/139827
- DE-A1-102007 032 678
- DE-A1-102008 057 648

## Beschreibung

Die vorliegende Erfindung betrifft eine Drehschwingungsdämpfungsanordnung, insbesondere für den Antriebsstrang eines Fahrzeugs, umfassend einen Eingangsbereich und einen Ausgangsbereich, wobei zwischen dem Eingangsbereich und dem Ausgangsbereich ein erster Drehmomentübertragungsweg und parallel dazu ein zweiter Drehmomentübertragungsweg sowie eine Kopplungsanordnung zur Überlagerung der über die Drehmomentübertragungswege geleiteten Drehmomente vorgesehen sind, wobei wenigstens im ersten Drehmomentübertragungsweg eine Phasenschieberanordnung vorgesehen ist zur Erzeugung einer Phasenverschiebung von über den ersten Drehmomentübertragungsweg geleiteten Drehungleichförmigkeiten bezüglich über den zweiten Drehmomentübertragungsweg geleiteten Drehungleichförmigkeiten, gemäß dem Oberbegriff des Anspruchs 1.

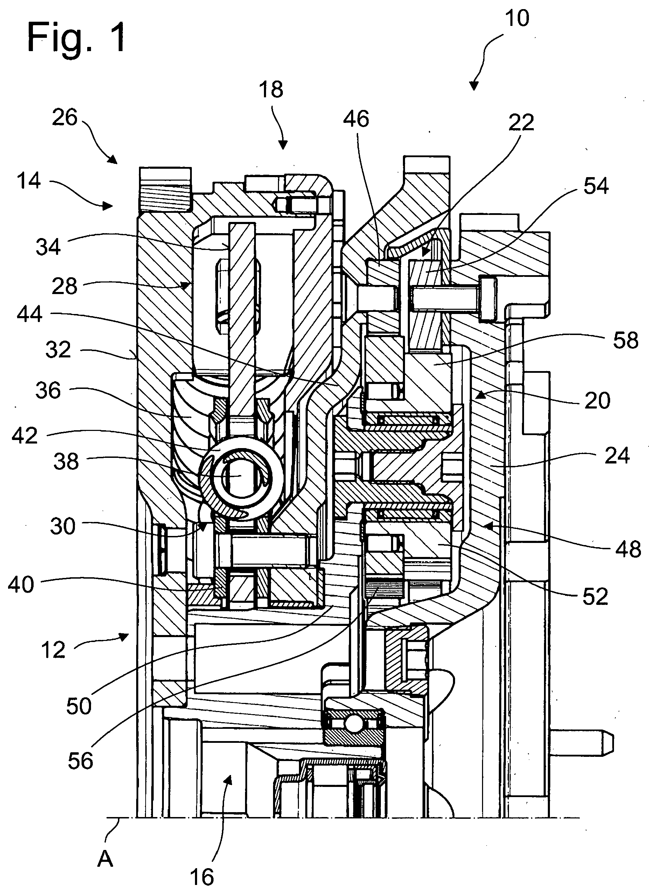

Eine derartige Drehschwingungsdämpfungsanordnung, bei welcher im Drehmomentübertragungsweg zwischen dem Eingangsbereich eine Leistungs- bzw. Drehmomentenverzweigung, eine Phasenverschiebung in einem bzw. zumindest einem der Drehmomentübertragungswege und eine Zusammenführung der zueinander phasenverschobenen Drehmomente bzw. der Schwingungsanteile darin in der Kopplungsanordnung erfolgt, ist aus der nachveröffentlichten deutschen Patentanmeldung
DE 10 2011 007 118 (WO 2011/147633 gem. Art. 54(3) EPÜ) bekannt. Der Aufbau und die grundsätzliche Funktionsweise einer derartigen Drehschwingungsdämpfungsanordnung werden nachfolgend mit Bezug auf die Fig. 1 erläutert.

Die in Fig. 1 allgemein mit 10 bezeichnete Drehschwingungsdämpfungsanordnung umfasst einen an einem Antriebsorgan, also beispielsweise der Kurbelwelle einer Brennkraftmaschine, zur gemeinsamen Drehung damit um eine Drehachse A festzulegenden Eingangsbereich 12. Im Eingangsbereich 12 wird das über die Drehschwingungsdämpfungsanordnung 10 zu übertragende Drehmoment auf zwei Drehmomentübertragungswege 14, 16 aufgezweigt. Im ersten Drehmomentübertragungsweg 14 ist eine Phasenschieberanordnung 18 vorgesehen, welche in bestimmten Betriebszuständen zu einer Phasenverschiebung des über den ersten Drehmomentübertragungsweg 14 geleiteten Drehmomentenanteils bzw. von darin enthaltenen Schwingungen führt.

In einer allgemein mit 20 bezeichneten Kopplungsanordnung werden die beiden Drehmomentenanteile einander überlagert und über einen Ausgangsbereich 22 an ein Abtriebsorgan 24, hier beispielsweise ein Schwungrad einer Reibungskupplung, weitergeleitet.

Die im ersten Drehmomentübertragungsweg vorgesehene Phasenschieberanordnung 18 umfasst ein Schwingungssystem 26, welches wiederum im dargestellten Beispiel zwei zueinander seriell wirksame Schwingungsdämpfer 28, 30 aufweist. Eine Primärseite 32 des ersten Schwingungsdämpfers 28 ist mit zwei Deckscheibenelementen aufgebaut, von welchen eines den oder einen Teil des Eingangsbereichs 12 bereitstellt oder damit verbunden ist. Eine Sekundärseite 34 des ersten Schwingungsdämpfers 28 umfasst ein zwischen die beiden Deckscheibenelemente eingreifendes Zentralscheibenelement. Die Primärseite 32 und die Sekundärseite 34 sind gegen die Rückstellwirkung einer Federanordnung 36 um die Drehachse A bezüglich einander drehbar.

Eine Primärseite 38 des im Wesentlichen radial innerhalb des Schwingungsdämpfers 28 positionierten Schwingungsdämpfers 30 umfasst den radial inneren Bereich des die Sekundärseite 34 des Schwingungsdämpfers 28 bereitstellenden Zentralscheibenelements. Eine Sekundärseite 40 des Schwingungsdämpfers 38 umfasst zwei beidseits des radial inneren Bereichs des Zentralscheibenelements liegende Deckscheibenelemente. Diese Primärseite 38 und Sekundärseite 40 sind vermittels einer weiteren Federanordnung 42 bezüglich einander um die Drehachse A drehbar.

Die Sekundärseite 40, also die beiden Deckscheibenelemente, sind beispielsweise durch Verschraubung oder Vernietung mit einem Hohlradträger 44 fest verbunden. Dieser trägt in seinem radial äußeren Bereich ein beispielsweise kreisringartig oder segmentartig ausgebildetes antriebsseitiges Hohlrad 46 der Kopplungsanordnung 20.

Die Kopplungsanordnung 20 umfasst eine allgemein mit 48 bezeichnete Planetengetriebeanordnung. Ein Planetenradträger 50 derselben ist in den zweiten Drehmomentübertragungsweg 16 integriert bzw. stellt einen wesentlichen Bereich desselben bereit und ist beispielsweise zusammen mit der Primärseite 32 des Schwingungsdämpfers 28 an einem Antriebsorgan festzulegen. Am Planetenradträger 50 sind mehrere in Umfangsrichtung mit der Drehachse A verteilt liegende Planetenräder 52 um zur Drehachse A jeweils im Wesentlichen parallele Drehachsen drehbar getragen. Die Planetenräder 52 weisen jeweils in Zuordnung zu dem antriebsseitigen Hohlrad 46 und in Zuordnung zu einem abtriebsseitigen Hohlrad 54 Verzahnungsbereiche 56, 58 auf. Dabei ist vorgesehen, dass das antriebsseitige Hohlrad 46 in Verbindung mit dem Verzahnungsbereich 56 und das abtriebsseitige Hohlrad 54 in Verbindung mit dem Verzahnungsbereich 58 zueinander unterschiedliche Übersetzungsverhältnisse bereitstellen, was, wie in der Fig. 1 erkennbar, beispielsweise dadurch erreicht werden kann, dass diese Verzahnungsbereiche 56, 58 zueinander unterschiedlichen Durchmesser aufweisen. Selbstverständlich sind die beiden Verzahnungsbereiche 56, 58 miteinander drehfest.

Das abtriebsseitige Hohlrad 54 stellt den bzw. einen wesentlichen Bereich des Ausgangsbereichs 22 bereit und ist beispielsweise durch Verschraubung mit dem Abtriebsorgan 24 verbunden. Es sei hier darauf hingewiesen, dass das Abtriebsorgan 24 selbstverständlich abhängig vom aufzubauenden Antriebsstrang auch anders ausgeführt sein könnte. Insbesondere könnte der Ausgangsbereich 22 mit dem Eingangsbereich eines hydrodynamischen Drehmomentwandlers, einer Fluidkupplung, einer nasslaufenden Kupplung, eines Hybridantriebsmoduls oder auch unmittelbar mit einer Getriebeeingangswelle gekoppelt sein.

Das Schwingungssystem 26 weist eine Eigenfrequenz auf. Wird es mit Schwingungen angeregt, welche unter dieser Eigenfrequenz liegen, so werden diese Schwingungen phasengleich über das Schwingungssystem 26 übertragen. Das Schwingungssystem 26 arbeitet dann in einem unterkritischen Zustand. Sind Schwingungen zu übertragen, deren Frequenz über der Eigenfrequenz des Schwingungssystems 26 liegt, so geht dieses in einen überkritischen Zustand über, in welchem das in den Eingangsbereich bzw. die Primärseite 32 eingeleitete Drehmoment bezüglich des an der Sekundärseite 40 abgegebenen Drehmoments bis zu einer maximalen Phasenverschiebung von 180°verschoben ist. Diese Phasenverschiebung hat z ur Folge, dass die dann in der Kopplungsanordnung 20 überlagerten Drehmomentenanteile mit ihren entsprechend phasenverschobenen Schwingungsanteilen einander destruktiv überlagert werden, so dass im Idealfall die Schwingungsanteile einander vollständig eliminieren und ein im Wesentlichen geglätteter Drehmomentenverlauf am Ausgangsbereich 22 erhalten wird.

Es ist darauf hinzuweisen, dass vorangehend mit Bezug auf die Fig. 1 der Aufbau und die Funktionsweise einer derartigen Drehschwingungsdämpfungsanordnung 10 nur in prinzipieller Hinsicht und mit Bezug auf eine einzige dargestellte Ausgestaltungsform beschrieben wurde. Es ist selbstverständlich, dass hier verschiedenste Variationen vorgesehen sein können. So könnte beispielsweise das Schwingungssystem 26 auch nur einen einzigen Schwingungsdämpfer aufweisen. Die Kopplungsanordnung 20 könnte an Stelle der beiden Hohlräder 46, 54 mit Sonnenrädern ausgebildet sein. Eine vollständige Beschreibung einer größeren Anzahl von Variationsmöglichkeiten ist in der vorangehend angegebenen nachveröffentlichten deutschen Patentanmeldung DE 10 2011 007 118 enthalten, auf welche insbesondere hinsichtlich dieser Variationsmöglichkeiten hiermit ausdrücklich Bezug genommen wird.

Mit einer Drehschwingungsdämpfungsanordnung, wie sie vorangehend mit Bezug auf die Fig. 1 erläutert wurde, ist im Allgemeinen im Antriebsstrang eines Fahrzeugs ein Drehmoment zwischen zwei rotierenden Baugruppen zu übertragen, also beispielsweise einer als Kurbelwelle ausgebildeten Antriebswelle und einer als Getriebeeingangswelle ausgebildeten Abtriebswelle. Auf Grund beim Aufbau eines Fahrzeugs grundsätzlich nicht vermeidbarer Montagetoleranzen ist im Allgemeinen zwischen der Drehachse der Antriebswelle und der Drehachse der Abtriebswelle ein Achsversatz bzw. eine Achsneigung vorhanden. Die in Fig. 1 erkennbare Drehachse A stellt nur vereinfacht grundsätzlich eine Achse dar, um welche in prinzipieller Hinsicht die verschiedenen Baugruppen rotieren. Ein Radialversatz bzw. auch ein Winkelversatz der zur Drehung miteinander zu koppelnden Wellen bzw. Baugruppen führt jedoch dazu, dass in der koppelnden Baugruppe, also beispielsweise der Drehschwingungsdämpfungsanordnung 10, im Rotationsbetrieb permanent Taumelbelastungen bzw. Belastungen in radialer oder/und axialer Richtung auftreten, welche zu einem erheblichen Verschleiß bzw. zu einer Beeinträchtigung der Schwingungsdämpfungsfunktionalität führen können.

Es ist die Aufgabe der vorliegenden Erfindung, eine Drehschwingungsdämpfungsanordnung, insbesondere für den Antriebsstrang eines Fahrzeugs, vorzusehen, bei welcher durch einen Achsversatz zweier zur Rotation miteinander zu koppelnder Baugruppen hervorgerufene Betriebsbeeinträchtigungen vermieden werden können.

Erfindungsgemäß wird diese Aufgabe gelöst durch eine Drehschwingungsdämpfungsanordnung, insbesondere für den Antriebsstrang eines Fahrzeugs, umfassend einen Eingangsbereich und einen Ausgangsbereich, wobei zwischen dem Eingangsbereich und dem Ausgangsbereich ein erster Drehmomentübertragungsweg und parallel dazu ein zweiter Drehmomentübertragungsweg sowie eine Kopplungsanordnung zur Überlagerung der über die Drehmomentübertragungswege geleiteten Drehmomente vorgesehen sind, wobei wenigstens im ersten Drehmomentübertragungsweg eine Phasenschieberanordnung vorgesehen ist zur Erzeugung einer Phasenverschiebung von über den ersten Drehmomentübertragungsweg geleiteten Drehungleichförmigkeiten bezüglich über den zweiten Drehmomentübertragungsweg geleiteten Drehungleichförmigkeiten, wobei in den Eingangsbereich oder/und den Ausgangsbereich oder/und den ersten Drehmomentübertragungsweg oder/und den zweiten Drehmomentübertragungsweg eine Axial- oder/und Radial- oder/und Kippbewegungsfunktionalität integriert ist oder/und wobei der Eingangsbereich oder/und der Ausgangsbereich axial bewegbar oder/und radial bewegbar oder/und kippbewegbar an ein Antriebsorgan oder Abtriebsorgan angekoppelt oder ankoppelbar ist.

Da bei dem erfindungsgemäßen Aufbau einer Drehschwingungsdämpfungsanordnung dafür gesorgt ist, dass grundsätzlich Relativbewegungen innerhalb derselben bzw. im Bereich der Ankopplung derselben zugelassen sind, können Achsversätze, also Radial- oder Winkelversätze, nicht zu einem übermäßigen Verschleiß führen und auch keine Beeinträchtigung der Entkopplungsgüte bewirken.

Eine einfach aufzubauende und gleichwohl stabil wirkende Kopplungsanordnung umfasst eine Planetengetriebeanordnung, wobei die Planetengetriebeanordnung einen an den zweiten Drehmomentübertragungsweg angebundenen Planetenradträger mit einer Mehrzahl von daran drehbar getragenen Planetenrädern sowie eine an den ersten Drehmomentübertragungsweg angebundene erste Koppelradanordnung in Kämmeingriff mit den Planetenrädern und eine an den Ausgangsbereich angebundene zweite Koppelradanordnung in Kämmeingriff mit den Planetenrädern umfasst, wobei vorzugsweise die erste Koppelradanordnung in Verbindung mit den Planetenrädern und die zweite Koppelradanordnung in Verbindung mit den Planetenrädern zueinander unterschiedliche Übersetzungsverhältnisse bereitstellen.

Um durch die Relativbewegbarkeit verschiedener Komponenten eine Achsversatzkompensationsfunktionalität zu erhalten, ist vorgesehen, dass wenigstens ein Planetenrad an dem Planetenradträger dadurch axial bewegbar oder/und radial bewegbar oder/und kippbewegbar getragen ist, dass wenigstens ein ein Planetenrad am Planetenradträger tragendes Trageorgan bezüglich des Planetenradträgers axial bewegbar oder/und radial bewegbar oder/und kippbewegbar ist. Zusätzlich kann ein derartiges Planetenrad auf einem dieses tragenden und am Planetenradträger haltenden Trageorgan beispielsweise unter Einsatz der voranstehend erläuterten Lagerung getragen bzw. gelagert sein.

Um bei dem erfindungsgemäßen Aufbau das Schwingungsdämpfungsverhalten an die in einem Antriebsstrang zu erwartenden Schwingungsanregungen anpassen zu können, wird weiter vorgeschlagen, dass die Phasenschieberanordnung ein Schwingungssystem mit einer Primärseite und einer gegen die Wirkung einer Federanordnung bezüglich der Primärseite um eine Drehachse drehbaren Sekundärseite umfasst, wobei vorzugsweise das Schwingungssystem wenigstens zwei zueinander seriell wirksame Schwingungsdämpfer oder/und wenigstens zwei zueinander parallel wirksame Schwingungsdämpfer jeweils mit einer Primärseite und einer bezüglich dieser drehbaren Sekundärseite umfasst.

Die Koppelradanordnungen können jeweils als Hohlradanordnung oder als Sonhenradanordnung aufgebaut sein.

Die Axial- oder/und Radial- oder/und Kippbewegungsfunktionalität kann in das Schwingungssystem integriert sein. Hierbei ist zu berücksichtigen, dass ein derartiges beispielsweise nach Art eines Torsionsschwingungsdämpfers bzw. Zweimassenschwungrads aufgebautes Schwingungssystem grundsätzlich die Relativbewegbarkeit zweier Baugruppen, nämlich einer Primärseite und einer Sekundärseite erfordert. Neben der hier grundsätzlich zuzulassenden Relativdrehbarkeit kann beispielsweise durch entsprechende Ausgestaltung der Lagerung dieser beiden Seiten bezüglich einander auch eine Bewegbarkeit in einem anderen Freiheitsgrad und damit eine die Kompensation des Achsversatzes zulassende Kopplung erzeugt werden. Insbesondere kann dabei vorgesehen sein, dass eine Primärseite und eine Sekundärseite axial bewegbar oder/und radial bewegbar oder/und kippbewegbar bezüglich einander sind.

Bei einer weiteren eine derartige Entkopplung bewirkenden Variante wird vorgeschlagen, dass wenigstens zwei Komponenten unter Zwischenlagerung oder/und vermittels einer eine Axialbewegung oder/und Radialbewegung oder/und Kippbewegung bezüglich einander zulassenden elastischen Formation miteinander verbunden sind. Alternativ oder zusätzlich kann vorgesehen sein, dass der Eingangsbereich oder/und der Ausgangsbereich unter Zwischenlagerung oder/und vermittels einer eine Axialbewegung oder/und Radialbewegung oder/und Kippbewegung zulassenden elastischen Formation an ein Antriebsorgan oder Abtriebsorgan angekoppelt oder ankoppelbar ist.

Die elastische Formation kann wenigstens ein Elastomermaterialelement umfassen. Dieses beispielsweise aus Gummi oder gummiartigem Material aufgebaute Elastomermaterialelement kann zwischen zwei in anderer Weise, beispielsweise durch Schraubbolzen oder dergleichen, gekoppelte Komponenten eingelagert werden, kann durch unmittelbare Anbindung an diese jedoch auch zur Drehmoment- bzw. Kraftübertragung genutzt werden.

Alternativ oder zusätzlich kann die elastische Formation wenigstens eine Flexplattenanordnung umfassen. Derartige Flexplattenanordnungen sind im Wesentlichen flächig ausgebildete Baugruppen, die auf Grund ihrer inhärenten Flexibilität insbesondere zum Ermöglichen einer Relativtaumel- bzw. Kippbewegung vorteilhaft sind.

Bei einer weiteren Ausgestaltungsvariante kann vorgesehen sein, dass wenigstens zwei Komponenten unter Erzeugung eines Axialbewegungsspiels oder/und eines Radialbewegungsspiels oder/und eines Kippbewegungsspiels miteinander verbunden sind. Das Bereitstellen eines Bewegungsspiels bei gleichwohl vorhandener Drehkopplung ermöglicht gleichermaßen, dass im Rotationsbetrieb die so gekoppelten Komponenten sich geringfügig, also im Rahmen des vorgesehen Bewegungsspiels bezüglich einander verlagern können und damit die Kompensation eines Achsversatzes ermöglichen.

Weiter kann vorgesehen sein, dass wenigstens zwei Komponenten vermittels einer eine Axialbewegung oder/und Radialbewegung oder/und Kippbewegung bezüglich einander zulassenden Lagerung miteinander verbunden sind. Die Lagerung kann ein wenigstens bereichsweise radial elastisches Lagerungselement umfassen und kann insbesondere auch als Drehlagerung ausgebildet sein.

Erfindungsgemäß kann zum Erhalt einer definierten Bewegbarkeit des Trageorgans vorgesehen sein, dass dieses in einer Radialschiebeführung im Planetenradträger gegen die Rückstellwirkung wenigstens eines elastischen Organs bewegbar ist.

Die vorliegende Erfindung wird nachfolgend mit Bezug auf die beiliegenden Figuren detailliert beschrieben. Es zeigt:
- Fig. 1: den grundsätzlichen Aufbau einer Drehschwingungsdämpfungsanordnung mit Leistungsverzweigung;
- Fig. 2: eine der Fig. 1 entsprechende Darstellung mit Veranschaulichung von Bereichen, in welchen eine Versatzkompensationsfunktionalität integriert sein kann;
- Fig. 3: eine der Fig. 1 entsprechende Darstellung einer Drehschwingungsdämpfungsanordnung mit in verschiedenen Bereichen integrierten Elastomermaterialelementen;
- Fig. 4: eine durch eine elastische Formation an ein Antriebsorgan angebundene Drehschwingungsdämpfungsanordnung;
- Fig. 5: ein Ausgestaltungsbeispiel einer als Flexplatte ausgebildeten elastischen Formation;
- Fig. 6: ein Ausgestaltungsbeispiel einer als Flexplatte ausgebildeten elastischen Formation;
- Fig. 7: ein Ausgestaltungsbeispiel einer als Flexplatte ausgebildeten elastischen Formation;
- Fig. 8: eine Drehschwingungsdämpfungsanordnung mit vermittels einer elastischen Formation an ein Abtriebsorgan angebundenem Ausgangsbereich;
- Fig. 9: eine Drehschwingungsdämpfungsanordnung mit in einen Planetenradträger integrierter elastischer Formation;
- Fig. 10: eine Drehschwingungsdämpfungsformation mit zweiteilig und Bewegungsspiel zwischen den Teilen ausgebildetem Planetenradträger;
- Fig. 11: in Teil-Axialansicht die Aufteilung des Planetenradträgers in zwei zur Drehung miteinander gekoppelte Teile;
- Fig. 12: eine Drehschwingungsdämpfungsanordnung mit kippbewegbar gelagerten Planetenrädern;
- Fig. 13: eine Drehschwingungsdämpfungsanordnung mit kippbewegbar gelagerten Planetenrädern;
- Fig. 14: in perspektivischer Darstellung eine elastische Formation, welche in der Ausgestaltungsform der Fig. 13 die kippbewegbare und radial bewegbare Lagerung der Planetenräder bewirkt;
- Fig. 15: eine Drehschwingungsdämpfungsanordnung mit radial verlagerbaren Planetenrädern;
- Fig. 16: eine Drehschwingungsdämpfungsanordnung mit radial verlagerbaren Planetenrädern;
- Fig. 17: eine Drehschwingungsdämpfungsanordnung mit radial verlagerbaren Planetenrädern;
- Fig. 18: in Teil-Axialansicht die radial bewegbare Halterung eines Planetenradtrageorgans am Planetenradträger;
- Fig. 19: eine Drehschwingungsdämpfungsanordnung mit radial bewegbar getragenen Planetenrädern;
- Fig. 20: in Teil-Axialansicht die radial bewegbare Halterung eines Planetenradtrageorgans am Planetenradträger.

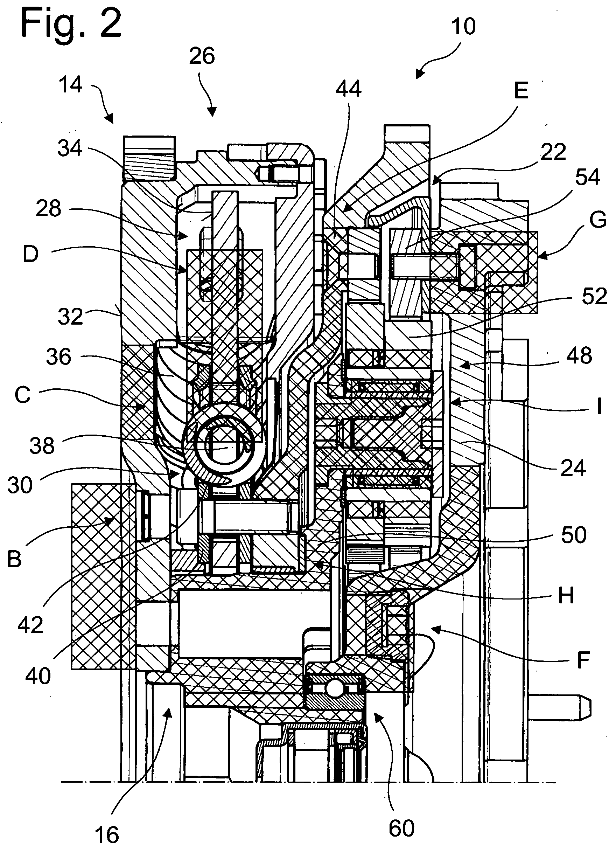

Zum grundsätzlichen Aufbau und zur grundsätzlichen Funktionalität einer erfindungsgemäß aufgebauten Drehschwingungsdämpfungsanordnung 10 wird zunächst auf die voranstehenden Ausführungen zur Fig. 1 verwiesen. In der folgenden Beschreibung wird mit Bezug auf die Fig. 2 bis 20 dargelegt, wo bzw. mit welchen konstruktiven Maßnahmen der in einem Antriebsstrang zwischen zwei vermittels der Drehschwingungsdämpfungsanordnung 10 zu koppelnden Baugruppen im Allgemeinen unvermeidbar vorhandene Achsversatz, also entweder Achsneigung oder Radialversatz oder Achsversatz, kompensiert werden kann.

Die Fig. 2 zeigt eine der Fig. 1 entsprechende Darstellung einer Drehschwingungsdämpfungsanordnung 10, bei welcher in Kreuzschraffur Systembereiche veranschaulicht sind, wo derartige der Entkopplung dienende Maßnahmen vorgesehen sein können. So veranschaulicht der mit B bezeichnete Bereich die Ankopplung der Drehschwingungsdämpfungsanordnung 10 an ein Antriebsorgan, also beispielsweise die Kurbelwelle einer Brennkraftmaschine. In den Bereich dieser Ankopplung können die zur Entkopplung erforderlichen Bewegungsfreiheitsgrade integriert werden. Der Bereich C veranschaulicht die Integration derartiger Maßnahmen in den ersten Drehmomentübertragungsweg 14, insbesondere die Primärseite 32 des Schwingungssystems 26 bzw. des radial äußeren, ersten Schwingungsdämpfers 28 desselben.

Mit D ist die Integration der Entkopplungsfunktionalität in das Schwingungssystem 26, also die Phasenschieberanordnung 18 selbst veranschaulicht. Hier können beispielsweise die Primärseite 32 und die Sekundärseite 34 oder/und die Primärseite 38 und die Sekundärseite 40 der beiden Schwingungsdämpfer 28, 30 bezüglich einander radial- oder/und axial- oder/und kippbewegbar sein. Da zwischen den jeweiligen Primärseiten und Sekundärseiten eine Kraft übertragende Wirkung durch die Federanordnungen 36, 42, also grundsätzlich elastische bzw. verformbare Baugruppen z.B. mit Schraubenfedern, realisiert ist, wird hier bei entsprechender Relativbewegbarkeit der an sich als starre Bauteile zu betrachtenden Primärseite bzw. Sekundärseite in einfacher Weise die Integration einer einen Achsversatz kompensierenden Entkopplungsfunktion ermöglicht.

Mit dem Bereich E ist die Integration dieser Funktionalität in den Hohlradträger 44 veranschaulicht. Sofern die Entkopplungsfunktion durch entsprechende Bewegungsfreiheit in dieses Bauteil integriert ist, ist es vorteilhaft, andere Verzahnungsbauteile der Planetengetriebeanordnung 48 zusätzlich auch zu entkoppeln.

Beispielsweise kann ein derartiger zusätzlicher oder alternativer Bereich der Versatzentkopplung im Bereich F vorgesehen sein, also im Abtriebsorgan 24 bzw., wie durch den Bereich G identifiziert, in der Ankopplung des Ausgangsbereichs 22, also z.B. des abtriebsseitigen Hohlrads 54, an das Abtriebsorgan 24, wobei die Bereiche G und F im Sinne der vorliegenden Erfindung gleichermaßen als eine mit entsprechender Entkopplungsfunktionalität versehene Anbindung des Ausgangsbereichs 22 an das Abtriebsorgan 24 zu interpretieren sind. Insbesondere die Integration einer derartigen Funktionalität in den Bereich F bringt den weiteren Vorteil mit sich, dass die in Fig. 2 radial innen erkennbare Lagerung 60 des Abtriebsorgans 24 entlastet werden kann.

Ein weiterer Bereich H, in welchen die Entkopplungsfunktionalität integriert werden kann, ist der zweite Drehmomentübertragungsweg 16 bzw. der Planetenradträger 50. Auch die durch den Bereich I bezeichnete Anbindung der Planetenräder 52 an den Planetenradträger 50 kann zur Integration der Entkopplungsfunktionalität durch die Bereitstellung einer dazu erforderlichen Relativbewegbarkeit genutzt werden.

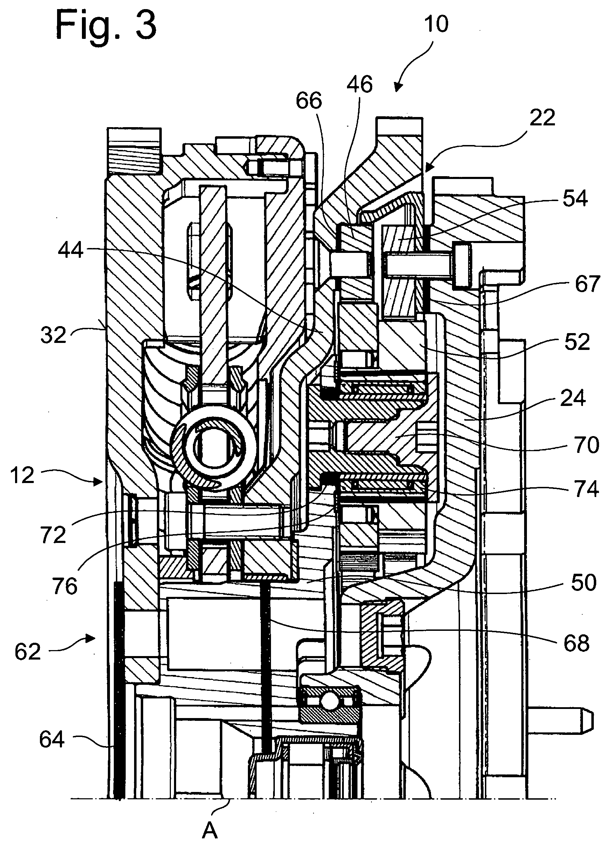

Die Fig. 3 veranschaulicht verschiedene einzeln, selbstverständlich aber auch in Kombination realisierbare Varianten der Integration einer elastischen Formation 62 in die erfindungsgemäße Drehschwingungsdämpfungsanordnung 10. So kann die elastische Formation 62 beispielsweise ein scheibenartig ausgebildetes Elastomermaterialelement 64, beispielsweise aufgebaut aus Gummimaterial, umfassen, welches vor dem Eingangsbereich 12 positioniert ist, also beispielsweise zwischen der Primärseite 32 und einer zur Ankopplung an ein Antriebsorgan, wie z.B. einer Kurbelwelle genutzten Baugruppe, oder direkt zwischen der Primärseite 32 und einem Kurbelwellenflansch. Durch die Verformung des auch nach Einbringung von Befestigungsschrauben auf Grund seiner elastischen Verformbarkeit eine Bewegung der gesamten Drehschwingungsdämpfungsanordnung 10 bezüglich der Drehachse A zulassenden Elastomermaterialelelements 64 werden Kipp- bzw. Taumelbewegungen, ebenso wie Axialbewegungen der Drehschwingungsdämpfungsanordnung 10 ermöglicht.

Gleichermaßen kann ein Elastomermaterialelement 66 zwischen dem Hohlradträger 44 und dem antriebsseitigen Hohlrad 46 positioniert werden, ebenso wie zwischen dem abtriebsseitigen Hohlrad 54 und mithin dem Ausgangsbereich 22 und dem damit durch Verschraubung oder dergleichen verbundenen Abtriebsorgan 24 ein Elastomermaterialelement 67 positioniert sein kann.

Weiterhin besteht die Möglichkeit, den Planetenradträger 50 zweiteilig auszugestalten und zwischen die beiden Teile ein Elastomermaterialelement 68 zu integrieren. Um die entsprechende Bewegungsfreiheit durch Bewegbarkeit der Planetenräder 52 bezüglich des Planetenradträgers 50 zu ermöglichen, kann ein bolzenartig ausgebildetes Trageorgan 70 unter Zwischenlagerung eines Elastomermaterialelements 72 in einer entsprechenden Öffnung des Planetentradträgers 50 aufgenommen sein und somit durch Bewegung bezüglich diesem zumindest in radialer Richtung, vorzugsweise aber auch durch Kippen, die Entkopplungsfunktionalität erfüllen. Auch besteht grundsätzlich die Möglichkeit, zwischen den Planetenrädern 52 und einer diese jeweils auf dem Trageorgan 70 drehbar lagernden Drehlagerung 74 ein beispielsweise ring- oder hülsenartig ausgebildetes Elastomermaterialelement 76 vorzusehen, so dass die Planetenräder 52 selbst bezüglich deren Lagerung 70 radial bewegbar bzw. verkippbar sind.

Es sei hier noch einmal betont, dass grundsätzlich die vorangehend beschriebenen Aspekte der Integration eines Elastomermaterialelements in verschiedene Bauteile oder den Angrenzungsbereich verschiedener Bauteile in der dargestellten Kombination realisiert sein kann oder auch einzeln. Vorteilhafterweise sind jedoch zumindest die Elastomermaterialelemente 66 und 67 zwischen den Hohlrädern 46 und 54 und den diese tragenden Baugruppen in Kombination vorgesehen.

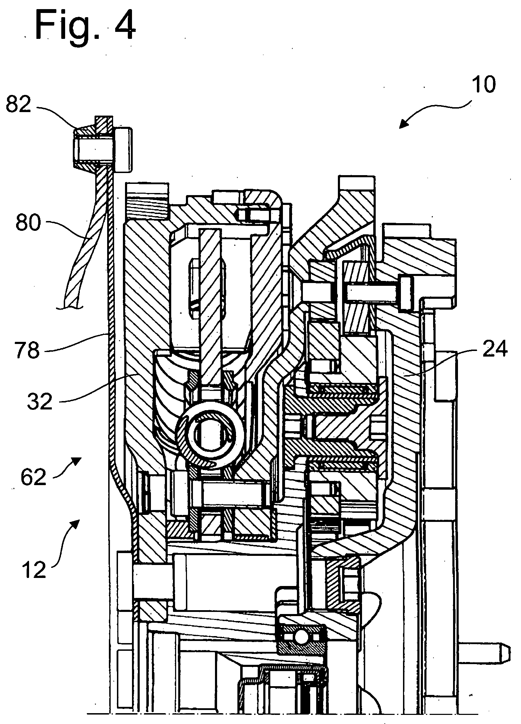

Die Fig. 4 zeigt eine insbesondere taumelelastische Ankopplung der Drehschwingungsdämpfungsanordnung 10 an ein hier nicht dargestelltes Antriebsorgan. Der Eingangsbereich 12, d.h., die Primärseite 32 bzw. eines der Deckscheibenelemente derselben, ist in seinem radial inneren Bereich durch Verschraubung, Vernietung oder dergleichen mit einer elastischen Formation 62 in Form einer so genannten Flexplatte 78 verbunden. Radial außen ist diese Flexplatte 78 durch Verschraubung oder dergleichen an ein scheibenartiges Verbindungselement 80 angebunden, das radial innen wiederum beispielsweise an die Kurbelwelle einer Brennkraftmaschine angebunden werden kann. Durch die Verschraubung der Flexplatte 78 mit dem Verbindungselement 80 im radial äußeren Bereich, insbesondere einem noch radial außerhalb der Drehschwingungsdämpfungsanordnung 10 liegenden Bereich, wird es in einfacher Weise möglich, die Drehschwingungsdämpfungsanordnung 10 mit der Flexplatte 78 als vormontierte Baueinheit vorzusehen und als solche axial an das bereits mit dem scheibenartigen Verbindungselement 80 vormontierte Antriebsaggregat heranzuführen und dann durch Verschraubung zu verbinden. Zum Bereitstellen des hierfür erforderlichen Gewindes kann in dem scheibenartigen Verbindungselement 80 eine Einpresshülse 82 vorgesehen sein. Die Verbindung zwischen der Flexplatte 78 und der Primärseite 32 bzw. dem Eingangsbereich 12 kann selbstverständlich auch in anderer Weise, beispielsweise durch Verklebung, Verschweißung oder Verlötung, also allgemein materialschlüssig erfolgen. Insbesondere wird es dadurch auch möglich, die Drehschwingungsdämpfungsanordnung 10 als nach außen vollständig gekapselte und somit fluiddichte Baugruppe bereitzustellen, wobei insbesondere die Sekundärseite 24 im radial inneren Bereich keine Bohrungen oder Durchtritte aufweisen muss.

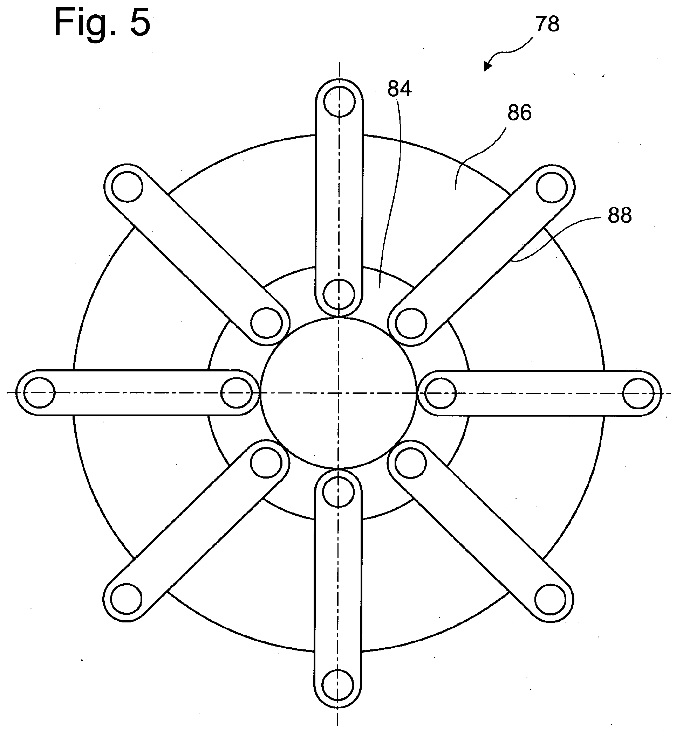

Die Fig. 5 bis 7 zeigen verschiedene Ausgestaltungsformen einer derartigen Flexplatte 78. So ist in Fig. 5 die Flexplatte 78 mit zwei radial gestaffelt und vorzugsweise koaxial zueinander liegenden Ringelementen 84, 86, beispielsweise aus Blechmaterial, ausgebildet. Zwischen diesen erstrecken sich im Wesentlichen in radialer Richtung jeweilige beispielsweise durch Vernietung an die Ringelemente 84, 86 angebundene Federelemente 88, beispielsweise Blattfedern. Auch hier könnte selbstverständlich die Verbindung auch durch Verkleben, Verlöten, Verschweißen, also materialschlüssig, oder durch Einlegen und Verstemmen oder Verschrauben erfolgen. Die Blattfedern 88 können einlagig oder mehrlagig ausgeführt sein und sie können an den Ringelementen 84, 86 an beiden axialen Seiten oder nur an einer axialen Seite vorgesehen sein.

Die in Fig. 5 gezeigte Ausgestaltungsform einer Flexplatte 78 ist auf Grund der besonders guten Taumelentkopplungsgüte, also der leichten Verkippbarkeit der beiden Ringelemente 84, 86, bezüglich einander, besonders vorteilhaft.

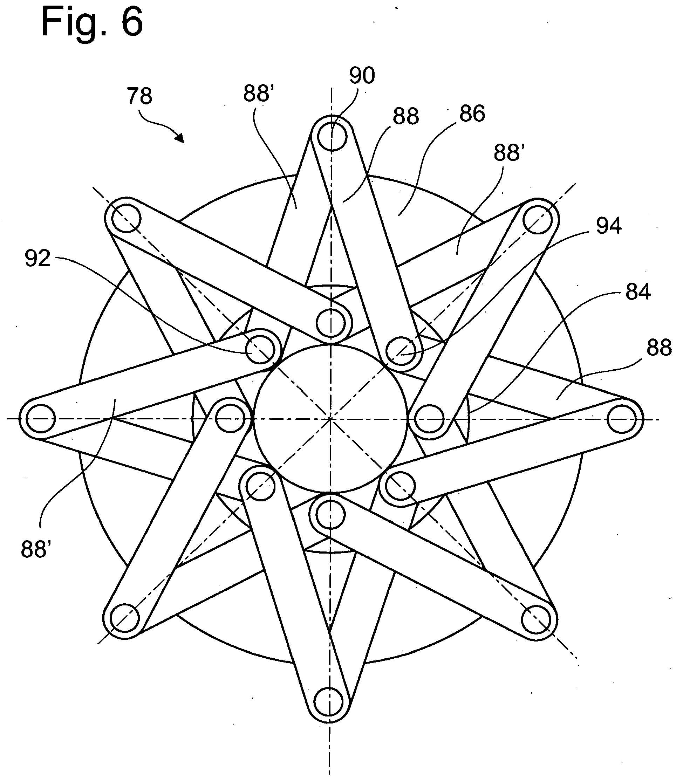

Die Fig. 6 zeigt eine Ausgestaltungsvariante, bei welcher die beiden Ringelemente 84, 86 der Flexplatte 78 durch einander paarweise jeweils zugeordnete Blattfedern 88, 88' verbunden sind. Die paarweise einander zugeordneten Blattfederelemente 88, 88' sind in ihrem radial äußeren Bereich im gleichen Umfangsbereich mit dem Ringelement 86 verbunden, während sie in ihrem radial inneren Bereich in in Umfangsrichtung zueinander versetzt liegenden Bereichen mit dem radial inneren Ringelement 84 verbunden sind. Hierzu kann beispielsweise vorgesehen sein, dass radial außen die gemeinsame Festlegung der Blattfederelemente 88, 88' eines Paares durch einen gemeinsamen Nietbolzen 90 erfolgt, während radial innen die Blattfedern 88, 88' eines Paares jeweils durch Nietbolzen 92 bzw. 94 mit einem Blattfederelement 88' bzw. 88 eines in Umfangsrichtung jeweils folgenden übernächsten Blattfederpaares an das Ringelement 84 angebunden sind. Es ergibt sich somit die in Fig. 6 erkennbare sternartige Konfiguration, bei welcher alternierend jeweils eine Blattfeder 88 eines Paares axial vor bzw. hinter einer Blattfeder 88' eines unmittelbar benachbarten Paares verläuft.

Der wesentliche Vorteil dieser Ausgestaltungsform ist bei etwas geringerer Taumelentkopplungsfähigkeit ein höheres Drehmomentübertragungsvermögen, da durch die sternartige Anordnung der Blattfederelemente diese selbst eine Relatiwerdrehung der beiden Ringelemente 84, 86 bezüglich einander nicht zulassen.

Es sei darauf hingewiesen, dass auch bei dieser Ausgestaltungsform die Anbindung der Blattfedern an das radial innere Ringelement 84 und das radial äußere Ringelement 86 in einer anderen Art und Weise erfolgen kann, beispielsweise so wie vorangehend erläutert. Auch sei darauf hingewiesen, dass bei dieser Ausgestaltungsform einzelne oder alle Blattfedern 88, 88' jeweils einlagig oder mehrlagig und nur an einer Seite oder beidseits der Ringelemente 84, 86 ausgeführt sein können.

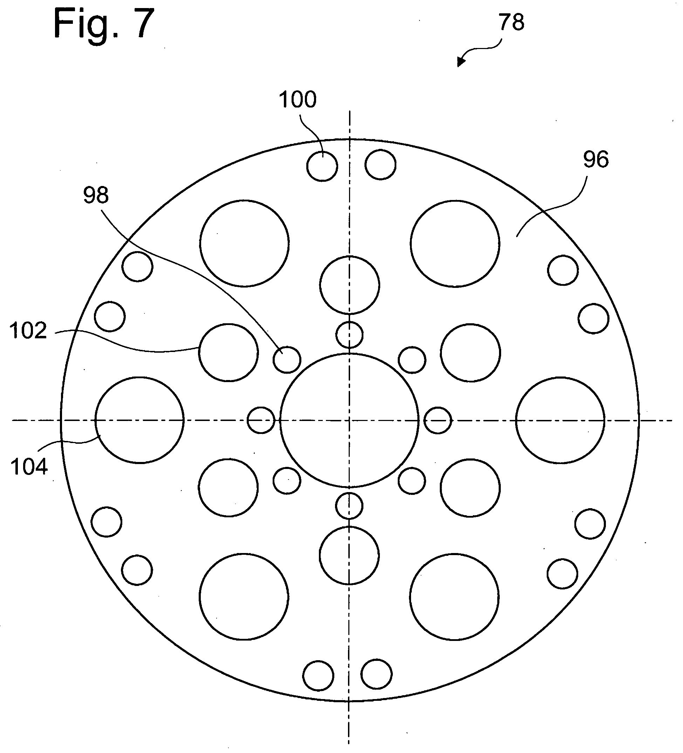

Eine weitere Ausgestaltungsform einer Flexplatte 78 ist in Fig. 7 gezeigt. Diese umfasst eine einlagig oder ggf. mehrlagig aufgebaute Scheibe 96. In ihrem radial inneren Bereich weist diese eine Öffnungsformation 98 beispielsweise zur Anbindung radial innen an den Eingangsbereich 12 oder ein Antriebsorgan auf. In ihrem radial äußeren Bereich weist sie eine Öffnungsformation 100 beispielsweise zur Anbindung an das in Fig. 4 erkennbare Verbindungselement 80 auf. Zwischen diesen radial inneren und radial äußeren Bereichen sind weitere Öffnungen 102 bzw. 104 vorgesehen, welche hier beispielsweise in zwei radial gestaffelt liegenden, ringartigen Formationen angeordnet sind. Zwischen den Öffnungen 102, 104 sind Stege gebildet, welche der Flexplatte 78 eine deutlich größere Flexibilität, insbesondere zum Bereitstellen einer Taumelentkopplung bzw. einer Axialbewegungsentkopplung verleihen, als dies bei einer ohne Öffnungen ausgebildeten Scheibe der Fall wäre.

Auf Grund der einteiligen Ausgestaltung, also der integralen Verbindung des radial inneren Bereichs mit dem radial äußeren Bereich, ist diese Flexplatte 78 besonders zur Übertragung hoher Drehmomente geeignet, kann also vorzugsweise in Antriebssträngen mit vergleichsweise leistungsstarken Antriebsaggregaten eingesetzt werden.

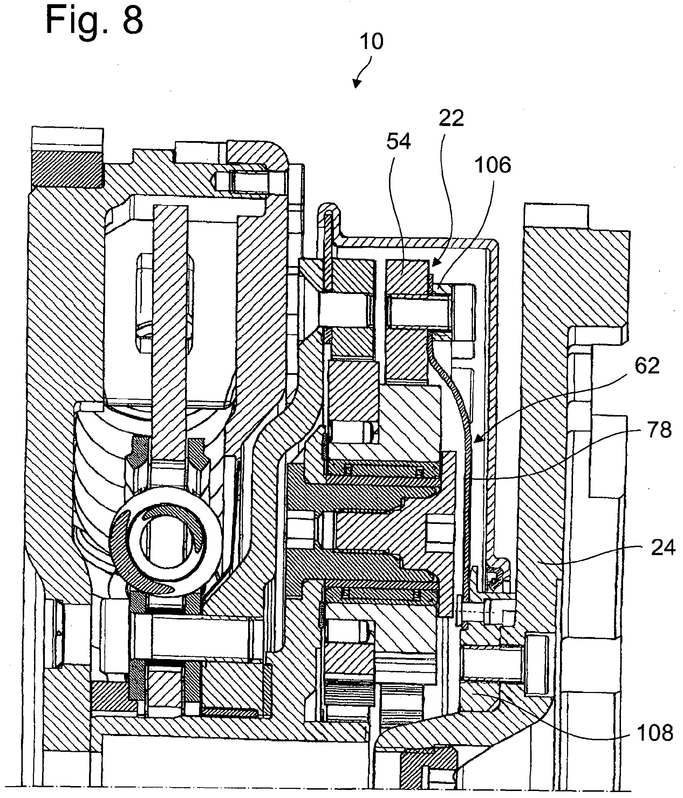

Eine derartige in Form einer Flexplatte 78 ausgebildete elastische Formation 62 kann selbstverständlich im Kontext der erfindungsgemäßen Drehschwingungsdämpfungsanordnung 10 auch oder zusätzlich an anderer Positionierung eingesetzt werden. So zeigt die Fig. 8 die Anbindung des Ausgangsbereichs 22 an das Abtriebsorgan 24 vermittels einer Flexplatte 78. Dabei kann die Flexplatte 78 in ihrem radial äußeren Bereich unter Einsatz eines Anschraubringes 106 an das abtriebsseitige Hohlrad 54 bzw. den durch dieses im Wesentlichen bereitgestellten Ausgangsbereich 22 angebunden sein. Radial innen kann die Flexplatte 78 beispielsweise durch Vernietung an ein ringartiges und durch Verschraubung am Abtriebsorgan 24, also dem Schwungrad, festzulegendes Element 108 angebunden sein.

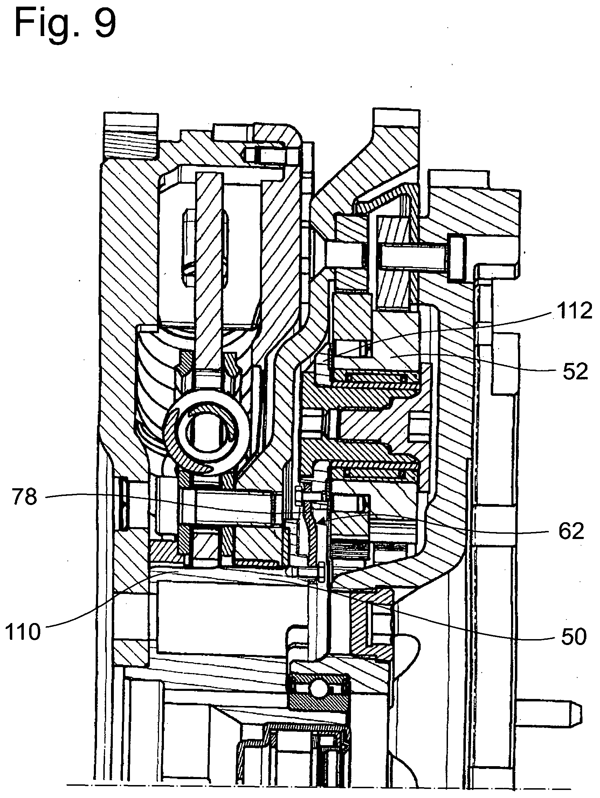

Eine weitere Variante der Eingliederung einer in Form einer Flexplatte 78 ausgebildeten elastischen Formation 62 ist in Fig. 9 dargestellt. Bei dieser Ausgestaltungsvariante ist der Planetenradträger 50 zweiteilig mit einem radial inneren im Wesentlichen auch die Formation zur Anbindung an ein Antriebsorgan bereitstellenden Teil 110 und einem radial äußeren scheibenartigen und die Planetenräder 52 tragenden Teil 112 aufgebaut. Diese sind durch die Flexplatte 78, welche den vorangehend erläuterten Aufbau aufweisen kann, miteinander verbunden, wobei die Anbindung der Flexplatte 78 in ihrem radial inneren Bereich und in ihrem radial äußeren Bereich beispielsweise durch Verschraubung, Vernietung, Verstemmen, Verkleben, Verlöten oder Verschweißen, also allgemein Materialschluss, erfolgen kann.

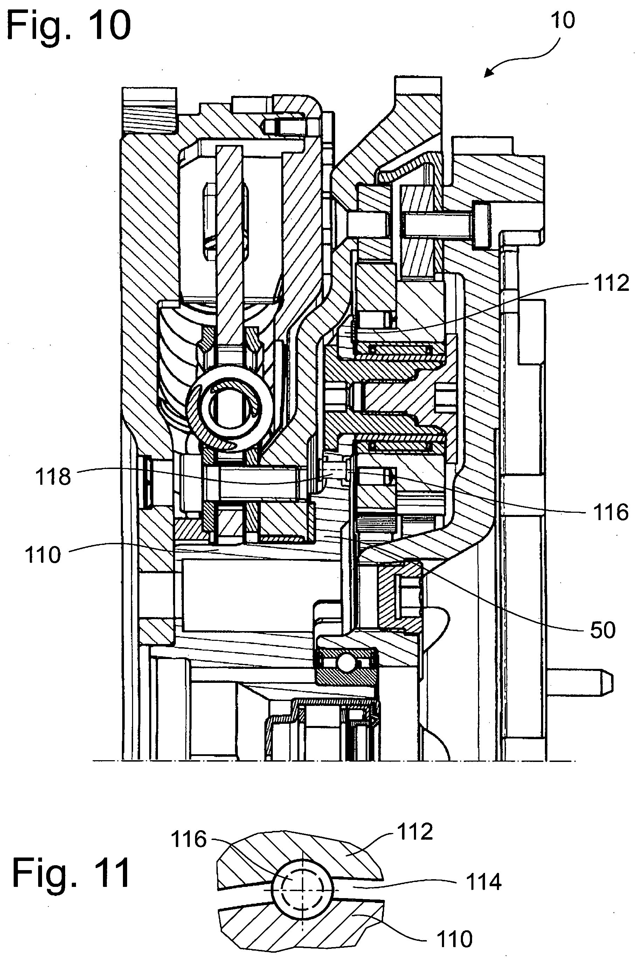

Die Fig. 10 und 11 zeigen eine Ausgestaltungsform der Drehschwingungsdämpfungsanordnung 10, bei welcher der Planetenradträger 50 zweiteilig mit einem radial inneren Teil 110 und einem radial äußeren Teil 112 aufgebaut ist. Wie die Teil-Axialansicht der Fig. 11 dies zeigt, ist zwischen diesen beiden Teilen 110, 112 ein radialer Zwischenraum 114 belassen. Die Verbindung der beiden Teile 110, 112 insbesondere zur Drehmomentübertragung erfolgt durch an mehreren Umfangspositionen im Zwischenraum 114 positionierte Verbindungsbolzen 116. In Zuordnung zu diesen sind am Innenumfang des äußeren Teils 112 und am Außenumfang des inneren Teils 110 beispielsweise kreissegmentartige Einbuchtungen vorgesehen, in welche ein Schaft 118 der Kopplungsbolzen 116 bereichsweise eingreift. Man erkennt jedoch in Fig. 11, dass die Länge des Schafts 118 etwas größer ist, als die Dicke der Teile 110, 112, so dass diese grundsätzlich axial bezüglich einander bewegbar, also mit Bewegungsspiel miteinander verbunden sind. Je nachdem, wie eng die Passung des Schafts 118 in den ihm zugeordneten Einbuchtungen ist, kann hier für eine Radialbewegbarkeit bzw. eine Kippbewegbarkeit durch mit Spiel behaftete Verbindung gesorgt sein.

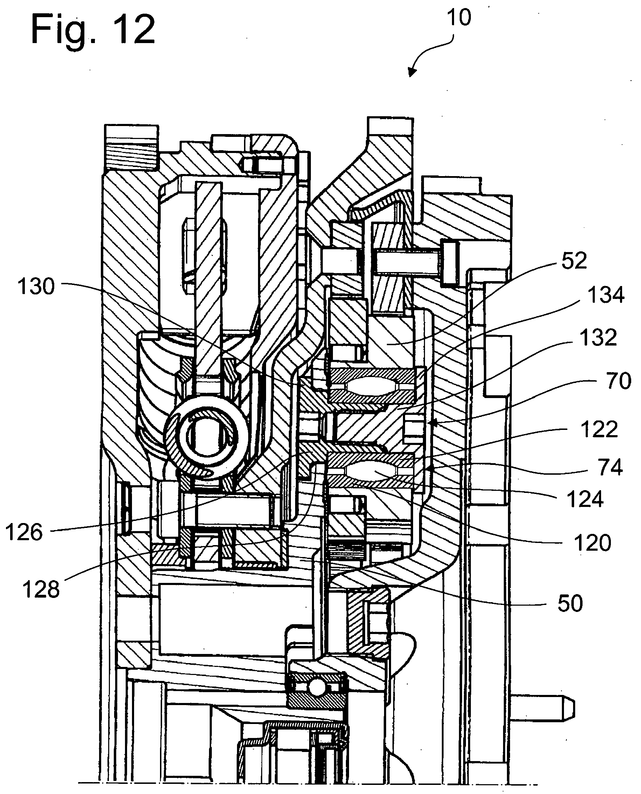

Bei der in Fig. 12 gezeigten Ausgestaltungsform der Drehschwingungsdämpfungsanordnung sind die Planetenräder 52 bezüglich des Planetenradträgers 50 bzw. der daran getragenen Trageorgane 70 kippbar getragen. Hierzu dient eine in Form eines Tonnenrollenlagers ausgebildete Lagerung 74 mit einem mit den Planetenrädern 52 gekoppelten äußeren Lagerring 120, einem unter Einsatz des Trageorgans 70 jeweils am Planetenradträger 50 festgelegten inneren Lagerring 122 und dazwischen zur Durchführung einer Rollbewegung positionierten tonnenartig ausgebildeten Wälzkörpern 124. Dabei kann die Festlegung des inneren Lagerrings 122 durch Einsatz eines zweiteiligen Trageorgans 70 erfolgen. Ein erstes Teil 126 ist durch eine Öffnung 128 im Planetenradträger 50 hindurchgeführt und hintergreift mit einem Kopfbereich 130 diesen. Ein zweites Teil 132 hintergreift mit seinem Kopfbereich 134 den inneren Lagerring 122 und ist in das erstgenannte Teil 126 eingeschraubt und somit mit diesem fest verbunden. Auf diese Art und Weise kann der innere Lagerring 122 zwischen diesen beiden Teilen 126,132 bzw. dem Teil 132 und dem Planetenradträger 50 geklemmt werden.

Durch die Formgebung der tonnenartig ausgebildeten Wälzkörper 124 wird es möglich, die Planetenräder 52 zusammen mit dem äußeren Lagerring 120 bezüglich des inneren Lagerrings 122 und damit auch bezüglich des Planetenradträgers 50 zu verkippen.

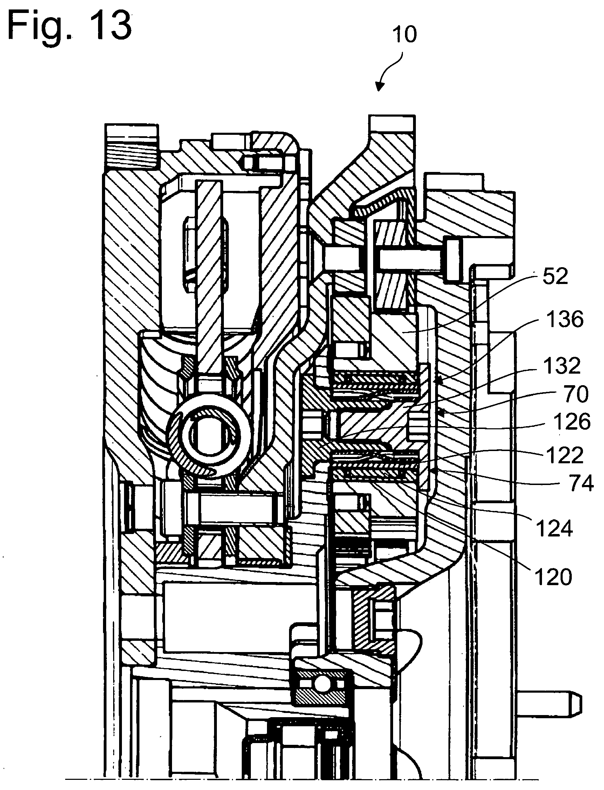

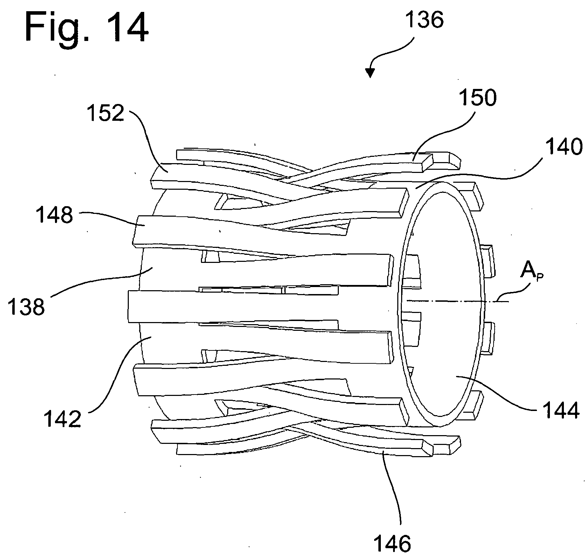

In Fig. 13 ist eine Ausgestaltungsform gezeigt, bei welcher radial innerhalb der als Wälzkörperlager, insbesondere hier als Nadellager ausgebildeten Lagerung 74, welche die Drehbarkeit des zugeordneten Planetenrads 52 auf dem Trageorgan 70 gewährleistet, eine weitere Lagerung 136 vorgesehen ist, welche eine Radialbewegbarkeit und eine Kippbewegbarkeit des Planetenrads 52 auf dem Trageorgan 74 ermöglicht. Diese weitere Lagerung 136 ist in Fig. 14 dargestellt.

Die Lagerung 136 umfasst zwei zueinander im Wesentlichen identisch aufgebaute Lagerungselemente 138, 140, welche bezüglich ihrer Mittenachse, die der Drehachse Ap eines jeweiligen Planetenrads 52 entspricht, zueinander entgegengesetzt orientiert und ineinander eingreifend angeordnet sind.

Jedes Lagerungselement 138 und 140 weist einen ringartigen Körperbereich 142 bzw. 144 auf. Das Lagerungselement 138 ist mit seinem ringartigen Körperbereich 142 auf dem Teil 126 des Trageorgans 70 beispielsweise bewegungsspielfrei getragen. Das Lagerungselement 140 ist mit seinem Körperbereich 144 auf dem Teil 132 des Trageorgans 70 beispielsweise bewegungsspielfrei getragen.

Ausgehend vom Körperbereich 142 bzw. 144 weisen die Lagerungselemente 138, 140 jeweilige Lagerungsarme 146, 148 auf. Diese sind vom jeweils zugeordneten Körperbereich 142, 144 ausgehend nach radial außen bezüglich der Längsmittenachse A_{P} abgekrümmt und stellen in ihrem jeweiligen freien Endbereich einen Stützbereich 150, 152 bereit. Auf den Stützbereichen 150, 152 ist der Lagerinnenring der als Wälzkörperlager ausgebildeten Lagerung 74 getragen.

Wie man in Fig. 14 erkennt, greifen die Lagerungsarme 146, 148 alternierend ineinander ein, so dass sich insgesamt eine radial elastische hülsenartige Konfiguration ergibt, bei welcher die Stützbereiche 152 radial bezüglich des Körperbereichs 142 und die Stützbereiche 150 radial bezüglich des Körperbereichs 144 bewegt werden können, und zwar auch unabhängig voneinander. Dies ermöglicht sowohl eine Radialverlagerung, als auch eine Kippbewegung des Lagerinnenrings 122 bezüglich der Körperbereiche 142, 144 und damit bezüglich des Trageorgans 70.

Die beiden Lagerungselemente 138, 140 können beispielsweise aus Kunststoffmaterial oder auch aus Metallmaterial aufgebaut sein. Weiter könnte die Anordnung auch derart sein, dass die Körperbereiche 142, 144 weiter radial außen liegen und die Lagerungsarme 146, 148 nach radial innen abgekrümmt sind. Um den Verschleiß der beiden Lagerungselemente 138, 140 insbesondere im Bereich der Stützbereiche 150, 152 gering zu halten, sollten diese zumindest in diesen Bereichen verschleißarm, beispielsweise mit einer verschleißfesten Beschichtung, ausgebildet sein.

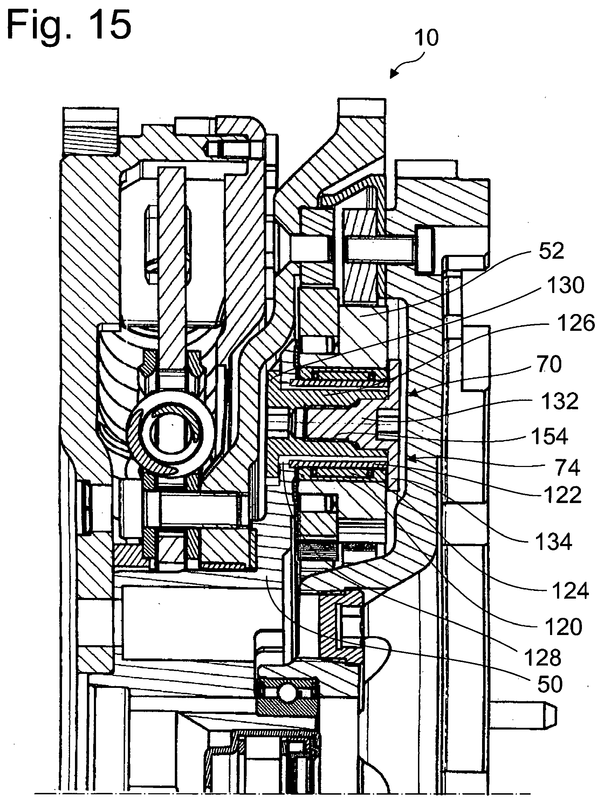

Bei der in Fig. 15 dargestellten Ausgestaltungsform ist das Teil 126 des Trageorgans 70 mit Radialbewegungsspiel in der zugeordneten Öffnung 128 im Planetenradträger 50 aufgenommen. Der Lagerinnenring 122 der als Wälzkörperlager ausgebildeten Lagerung 74 ist axial zwischen dem Planetenradträger 50 in seinem die Öffnung 128 umgebenden Bereich, beispielsweise in einer stufenartigen Einsenkung, abgestützt und zwischen dem Planetenradträger 50 und dem Kopf 134 des Teils 132 des Trageorgans 70 eingespannt. Durch Einschrauben des Teils 132 in eine Innengewindeöffnung 154 des Teils 126 kann die Spannung eingestellt werden. Der Lagerinnenring 122 ist als Stauchhülse ausgebildet, welche eine gewisse Axialelastizität aufweist bzw. bereitstellt und somit sicherstellt, dass der Kopf 130 unter Vorspannung an der vom Planetenrad 52 abgewandten Seite des Planetenradträgers 50 anliegt. In diesem Bereich besteht ein Reibungskontakt, welcher auf Grund der spielbehafteten Aufnahme des Teils 126 in der Öffnung 128 grundsätzlich eine Radialbewegung des Trageorgans 70 bezüglich des Planetenradträgers 50 und damit des auf dem Trageorgan 70 drehbar getragenen Planetenrads 50 zulässt.

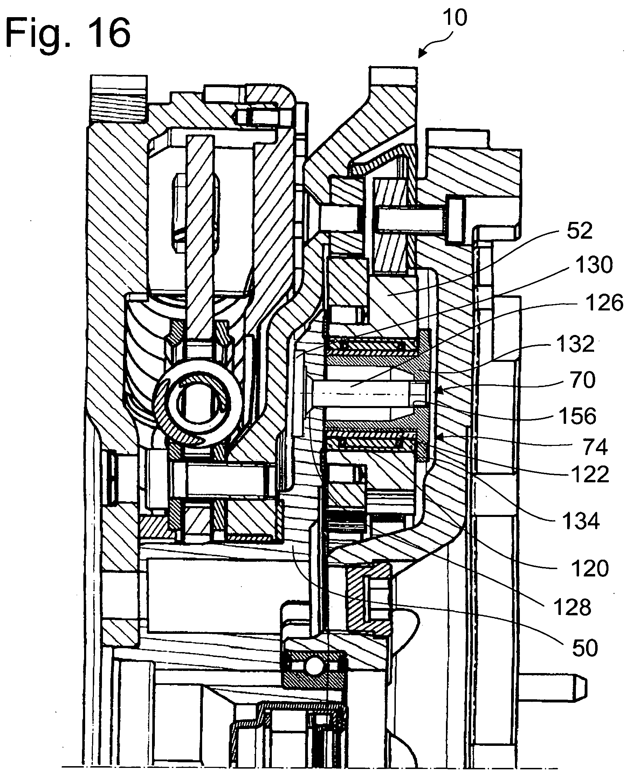

Das Problem, dass bei der in Fig. 15 dargestellten Ausgestaltungsform durch die axiale Vorspannung der als Stauchhülse ausgebildete Lagerinnenring 122 eine Ausbauchung erfahren kann und somit sich die Lagerfläche für die Wälzkörper 124 verformen kann, ist bei der in Fig. 16 dargestellten Ausgestaltungsform eliminiert. Auch bei dieser Ausgestaltungsform ist grundsätzlich das Teil 126 in der zugeordneten Öffnung 128 aufgenommen. Das Teil 126 ist als Dehnbolzen ausgebildet und in seinem freien Endbereich in eine Innengewindeöffnung 156 des Teils 132 des Trageorgans 70 eingeschraubt, und zwar derart, dass unter axialer Dehnung des Teils 126 das Teil 132 unter Vorspannung an den Planetenradträger 50 gezogen ist. Am Außenumfang des Teils 132 ist die Lagerung 74 getragen, jedoch ohne wesentliche axiale Einspannung, so dass hier eine Verformung insbesondere des Lagerinnenrings 122 nicht auftreten kann.

Da zwischen dem Teil 132 des Trageorgans 70 und dem Planetenradträger 50 eine Gleitreibungsbewegung ermöglicht ist, kann sich auch hier grundsätzlich das auf dem Trageorgan 70 getragene Planetenrad 52 radial bezüglich des Planetenradträgers 50 verlagern, wenn dies beispielsweise auf Grund des Auftretens von Taumelbewegungen bei Achsneigung oder von Relativradialbewegung bei Achsradialversatz erforderlich ist.

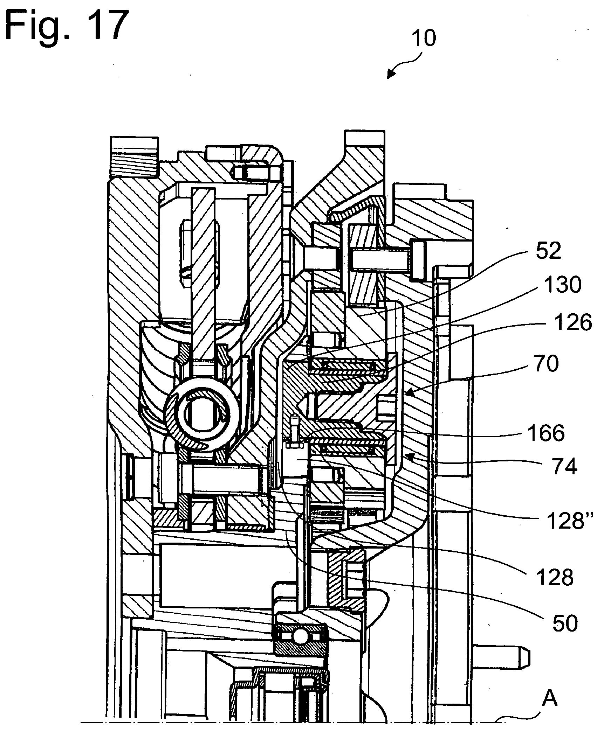

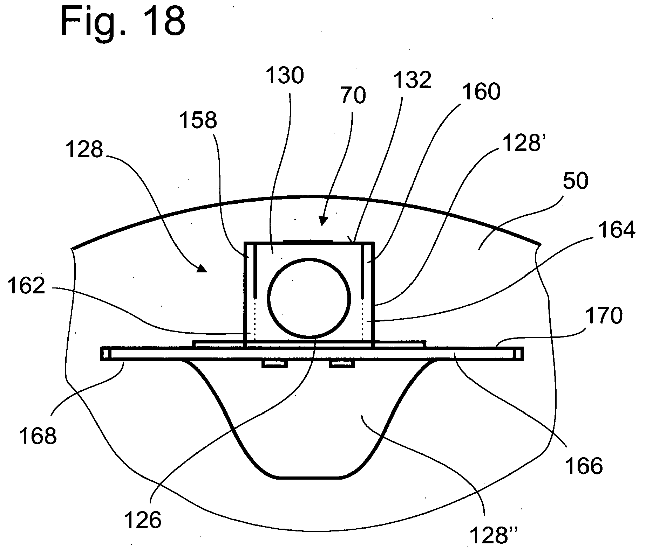

Die Fig. 17 und 18 zeigen eine weitere Ausgestaltungsvariante, bei welcher durch die Möglichkeit der Radialverlagerung der ein jeweiliges Planetenrad 52 tragenden Trageorgane 70 grundsätzlich eine Radialbewegbarkeit der Planetenräder 52 am Planetenradträger 50 ermöglicht ist. Dazu ist in dem Planetenradträger 50 in Zuordnung zu jedem Trageorgan 70 die von diesem durchsetzte Öffnung 128 in spezieller Weise ausgebildet. In einem ersten Öffnungsbereich 128' ist die Öffnung 128 beispielsweise quadratisch bzw. rechteckig ausgebildet, und der Kopf 130 des Teils 126 des Trageorgans 70 ist mit entsprechender Außenkontur ausgebildet und in diesem Öffnungsbereich 128' in radialer Richtung bezüglich der Drehachse A verschiebbar aufgenommen. An den beiden den Öffnungsbereich 128' in Umfangsrichtung begrenzenden Wandungen können nutartige Radialschiebeführungen 158, 160 vorgesehen sein, in welche zugeordnete Führungsvorsprünge 162, 164 zur definierten Radialbewegungsführung und Axialhalterung der Trageorgane 70 eingreifen können. Die Radialschiebeführungen 158, 160 können in einem beispielsweise radial inneren Bereich axial offen sein, um das Einführen der Führungsvorsprünge 162, 164 zu ermöglichen.

Radial innerhalb des der Radialführung des Kopfs 130 dienenden ersten Öffnungsbereichs 128' ist ein zweiter Öffnungsbereich 128" vorgesehen. Dieser ermöglicht auch das axiale Ausrichten des Kopfs 130 mit dem Planetenradträger 50 und somit das Einführen des Kopfs 130 in den ersten Öffnungsbereich 128' von radial innen, so dass es grundsätzlich ausreichend ist, wenn die Radialschiebeführungen 158, 160 nach radial innen offen sind und die in Umfangsrichtung federartig vorstehenden Führungsvorsprünge 162, 164 aufnehmen können.

In seinem radial inneren Bereich ist das Teil 126 im Bereich seines Kopfs 130 mit einem hier als Blattfeder ausgebildeten elastischen Organ 166 beispielsweise durch Verschraubung verbunden. Das elastische Organ 166 greift in Umfangsrichtung in zugeordnete Halteabschnitte 168, 170 der Öffnung 128 im Wesentlichen radialbewegungsspielfrei ein und ist in seinem in Umfangsrichtung mittleren Bereich, in welchem es auch mit dem Teil 126 fest verbunden ist, somit radial federnd in der Öffnung 128 aufgenommen. Bei radialer Belastung kann unter Verformung des elastischen Organs 166 in seinem in Umfangsrichtung mittleren Bereich nach radial innen in den zweiten Öffnungsbereich 128" hinein das Teil 126 und damit das gesamte Trageorgan 70 mit dem darauf drehbar getragenen Planetenrad 52 eine Radialbewegung ausführen. Bei entsprechender Ausgestaltung der Öffnung 128 ist selbstverständlich auch eine radialelastische Bewegung nach radial außen hin möglich, so dass das Trageorgan 70 am Planetenradträger 50 zumindest in einer Richtung radial elastisch aufgenommen ist.

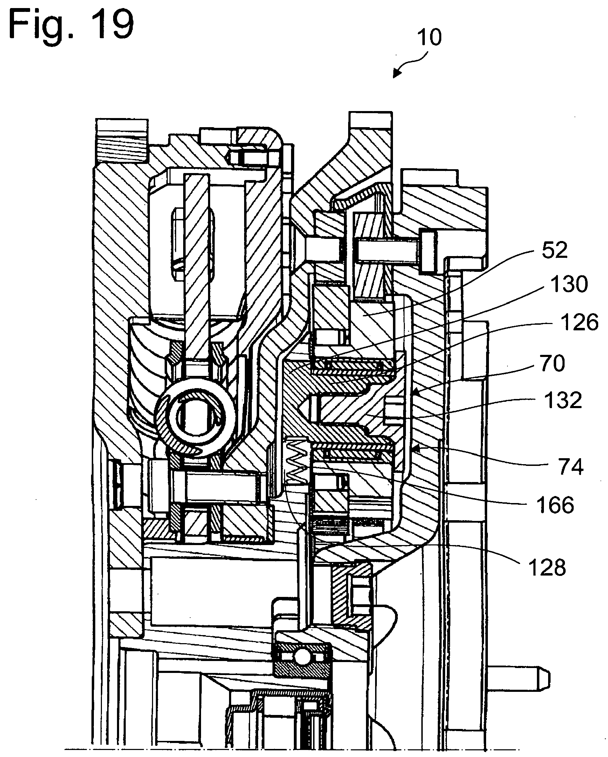

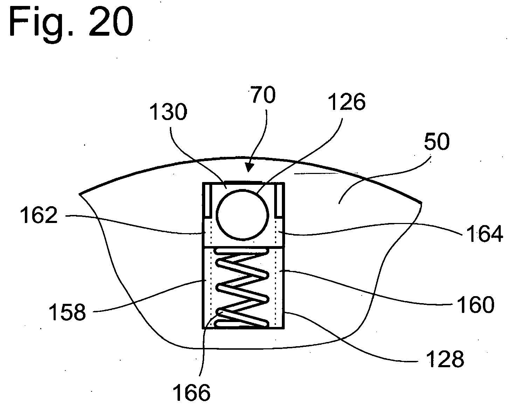

Eine abgewandelte Ausgestaltungsform hierzu ist in den Fig. 19 und 20 gezeigt. Auch hier ist die Öffnung 128 mit den beispielsweise nutartig ausgebildeten Radialschiebeführungen 158, 160 ausgebildet und der Kopf 130 des Teils 126 mit seinen Führungsvorsprüngen 162, 164 darin radial verschiebbar und axial gehalten aufgenommen. Auch hier können die Radialschiebeführungen 158, 160 in ihrem jeweiligen radial inneren Bereich zu zumindest einer Axialseite offen sein, um das axiale Einschieben und dann radiale Bewegen des Kopfs 130 zu ermöglichen. Das elastische Organ 166 ist hier als Schraubendruckfeder ausgebildet, welche sich im radial inneren Endbereich der Öffnung 128 am Planenetradträger 150 abstützt und in ihrem radial äußeren Ende den Kopf 130 nach radial außen belastet, so dass dieser unter der Vorspannung des elastischen Organs 166 sich radial außen am Planetenradträger 50 abstützt. Auch damit ist eine Radialbewegbarkeit des Trageorgans 70 und somit des darauf drehbar getragenen Planetenrads 52 ermöglicht.

Es sei darauf hingewiesen, dass hier grundsätzlich auch die Einspannung des Kopfs 130 zwischen einem radial innen positionierten elastischen Organ 166, so wie in Fig. 20 dargestellt, und einem radial außerhalb des Kopfs 130 positionierten und sich radial außen am Planetenradträger 50 abstützenden elastischen Organ eingespannt gehalten sein kann, so dass eine radialelastische Bewegung des Kopfs 130 und somit des Trageorgans 70 sowohl nach radial außen als auch nach radial innen ermöglicht ist.

Um eine axial feste Halterung des elastischen Organs 166 zu gewährleisten, kann dieses beispielsweise in seinem an dem Planetenradträger 50 sich abstützenden Endbereich in einer am Planetenrad 50 vorgesehenen und radial offenen Einsenkung aufgenommen sein.

Es sei abschließend darauf hingewiesen, dass selbstverständlich alle vorangehend beschriebenen Ausgestaltungsaspekte, welche eine Axialbewegbarkeit, eine Radialbewegbarkeit oder eine Kippbewegbarkeit verschiedener Komponenten oder Baugruppen bezüglich einander ermöglichen, einzeln oder in beliebiger Kombination vorgesehen sein können. Insofern, als diese Bewegbarkeit eine Bewegbarkeit der Planetenränder bezüglich des Planetentradträgers ist, ist vorteilhafterweise bei allen Planetenrädern durch entsprechende Maßnahmen für diese Bewegbarkeit gesorgt. Grundsätzlich könnten auch nur einzelne der Planetenräder in der entsprechenden Art und Weise am Planetenradträger oder dem zugeordneten Trageorgan bewegbar und auch drehbar getragen sein.

Weiter sei darauf hingewiesen, dass die erfindungsgemäß vorzusehenden und eine Relativbewegbarkeit zweier Komponenten zulassenden Ausgestaltungsvarianten selbstverständlich auch bei anderen Systemen, wie z.B. einem herkömmlichen mit Dämpferfedern aufgebauten Drehschwingungsdämpfer oder dergleichen, vorgesehen sein können.

## Patentansprüche

1. Drehschwingungsdämpfungsanordnung, insbesondere für den Antriebsstrang eines Fahrzeugs, umfassend einen Eingangsbereich (12) und einen Ausgangsbereich (22), wobei zwischen dem Eingangsbereich (12) und dem Ausgangsbereich (22) ein erster Drehmomentübertragungsweg (14) und parallel dazu ein zweiter Drehmomentübertragungsweg (16) sowie eine Kopplungsanordnung (20) zur Überlagerung der über die Drehmomentübertragungswege (14, 16) geleiteten Drehmomente vorgesehen sind, wobei wenigstens im ersten Drehmomentübertragungsweg (14) eine Phasenschieberanordnung (18) vorgesehen ist zur Erzeugung einer Phasenverschiebung von über den ersten Drehmomentübertragungsweg (14) geleiteten Drehungleichförmigkeiten bezüglich über den zweiten Drehmomentübertragungsweg (16) geleiteten Drehungleichförmigkeiten, wobei in den Eingangsbereich (12) oder/und den Ausgangsbereich (22) oder/und den ersten Drehmomentübertragungsweg (14) oder/und den zweiten Drehmomentübertragungsweg (16) eine Axial- oder/und Radial- oder/und Kippbewegungsfunktionalität integriert ist oder/und wobei der Eingangsbereich oder/und der Ausgangsbereich axial bewegbar oder/und radial bewegbar oder/und kippbewegbar an ein Antriebsorgan oder Abtriebsorgan angekoppelt oder ankoppelbar ist, wobei die Kopplungsanordnung (20) eine Planetengetriebeanordnung (48) umfasst, wobei die Planetengetriebeanordnung (48) einen an den zweiten Drehmomentübertragungsweg (16) angebundenen Planetenradträger (50) mit einer Mehrzahl von daran drehbar getragenen Planetenrädern (52) sowie eine an den ersten Drehmomentübertragungsweg (14) angebundene erste Koppelradanordnung (46) in Kämmeingriff mit den Planetenrädern (52) und eine an den Ausgangsbereich (22) angebundene zweite Koppelradanordnung (54) in Kämmeingriff mit den Planetenrädern (52) umfasst, **dadurch gekennzeichnet, dass** wenigstens ein Planetenrad (52) an dem Planetenradträger (50) dadurch axial bewegbar oder/und radial bewegbar oder/und kippbewegbar getragen ist, dass wenigstens ein ein Planetenrad (52) am Planetenradträger (50) tragendes Trageorgan (70) bezüglich des Planetenradträgers (50) axial bewegbar oder/und radial bewegbar oder/ und kippbewegbar ist.

2. Drehschwingungsdämpfungsanordnung nach Anspruch 1, **dadurch gekennzeichnet, dass** die Phasenschieberanordnung (18) ein Schwingungssystem (26) mit einer Primärseite (32) und einer gegen die Wirkung einer Federanordnung (36, 42) bezüglich der Primärseite (32) um eine Drehachse (A) drehbaren Sekundärseite (40) umfasst, wobei vorzugsweise das Schwingungssystem (26) wenigstens zwei zueinander seriell wirksame Schwingungsdämpfer (28, 30) oder/und wenigstens zwei zueinander parallel wirksame Schwingungsdämpfer jeweils mit einer Primärseite (32, 38) und einer bezüglich dieser drehbaren Sekundärseite (34, 40) umfasst.

3. Drehschwingungsdämpfungsanordnung nach Anspruch 1 oder 2, **dadurch gekennzeichnet, dass** die erste Koppelradanordnung (46) in Verbindung mit den Planetenrädern (52) und die zweite Koppelradanordnung (54) in Verbindung mit den Planetenrädern (52) zueinander unterschiedliche Übersetzungsverhältnisse bereitstellen.

4. Drehschwingungsdämpfungsanordnung nach Anspruch 3, **dadurch gekennzeichnet, dass** die erste Koppelradanordnung (46) und die zweite Koppelradanordnung (54) jeweils eine Hohlradanordnung oder Sonnenradanordnung umfassen.

5. Drehschwingungsdämpfungsanordnung nach Anspruch 2 oder einem der Ansprüche 3 und 4, sofern auf Anspruch 2 rückbezogen, **dadurch gekennzeichnet, dass** die Axial- oder/und Radial- oder/und Kippbewegungsfunktionalität in das Schwingungssystem (26) integriert ist.

6. Drehschwingungsdämpfungsanordnung nach Anspruch 5, **dadurch gekennzeichnet, dass** eine Primärseite (32, 38) und eine Sekundärseite (34, 40) axial bewegbar oder/und radial bewegbar oder/und kippbewegbar bezüglich einander sind.

7. Drehschwingungsdämpfungsanordnung nach einem der Ansprüche 1 bis 6, **dadurch gekennzeichnet, dass** wenigstens zwei Komponenten unter Zwischenlagerung oder/und vermittels einer eine Axialbewegung oder/und Radialbewegung oder/und Kippbewegung bezüglich einander zulassenden elastischen Formation (62) miteinander verbunden sind.

8. Drehschwingungsdämpfungsanordnung nach einem der Ansprüche 1 bis 7, **dadurch gekennzeichnet, dass** der Eingangsbereich (12) oder/und der Ausgangsbereich (22) unter Zwischenlagerung oder/und vermittels einer eine Axialbewegung oder/und Radialbewegung oder/und Kippbewegung zulassenden elastischen Formation (62) an ein Antriebsorgan oder Abtriebsorgan (24) angekoppelt oder ankoppelbar ist.

9. Drehschwingungsdämpfungsanordnung nach Anspruch 7 oder 8, **dadurch gekennzeichnet, dass** die elastische Formation (62) wenigstens ein Elastomermaterialelement (64; 66; 67; 68; 72) oder/und wenigstens eine Flexplattenanordnung (78) umfasst.

10. Drehschwingungsdämpfungsanordnung nach einem der Ansprüche 1 bis 9, **dadurch gekennzeichnet, dass** wenigstens zwei Komponenten (110, 112) unter Erzeugung eines Axialbewegungsspiels oder/und eines Radialbewegungsspiels (114) oder/und eines Kippbewegungsspiels miteinander verbunden sind.

11. Drehschwingungsdämpfungsanordnung nach einem der Ansprüche 1 bis 10, **dadurch gekennzeichnet, dass** wenigstens zwei Komponenten vermittels einer eine Axialbewegung oder/und Radialbewegung oder/und Kippbewegung bezüglich einander zulassenden Lagerung (64; 66; 67; 68; 72; 74; 136) miteinander verbunden sind.

12. Drehschwingungsdämpfungsanordnung nach Anspruch 11, **dadurch gekennzeichnet, dass** die Lagerung (72; 136) wenigstens ein wenigstens bereichsweise radialelastisches Lagerungselement (72; 138; 140) umfasst.

13. Drehschwingungsdämpfungsanordnung nach Anspruch 11 oder 12, **dadurch gekennzeichnet, dass** die Lagerung (74) eine Drehlagerung ist.

14. Drehschwingungsdämpfungsanordnung nach einem der Ansprüche 1 bis 13, **dadurch gekennzeichnet, dass** das Trageorgan (70) in einer Radialschiebeführung (128, 158, 160) im Planetenradträger (50) gegen die Rückstellwirkung wenigstens eines elastischen Organs (166) bewegbar ist.

## Claims

1. Rotary vibration damping arrangement, in particular for the drivetrain of a vehicle, comprising an input region (12) and an output region (22), wherein, between the input region (12) and the output region (22), there are provided a first torque-transmitting path (14) and, parallel thereto, a second torque-transmitting path (16) and also a coupling arrangement (20) for superposition of the torques conducted via the torque-transmitting paths (14, 16), wherein a phase shift arrangement (18) is provided at least in the first torque-transmitting path (14) for the purposes of generating a phase shift of rotational non-uniformities conducted via the first torque-transmitting path (14) in relation to rotational non-uniformities conducted via the second torque-transmitting path (16), wherein an axial and/or radial and/or tilting movement functionality is integrated into the input region (12) and/or into the output region (22) and/or into the first torque-transmitting path (14) and/or into the second torque-transmitting path (16), and/or wherein the input region and/or the output region are/is coupled or couplable in axially movable and/or radially movable and/or tiltably movable fashion to a drive-input element or drive-output element, wherein the coupling arrangement (20) comprises a planetary gear set arrangement (48), wherein the planetary gear set arrangement (48) comprises a planet gear carrier (50), which is connected to the second torque-transmitting path (16) and which has a multiplicity of planet gears (52) rotatably supported thereon, and said planetary gear set arrangement comprises a first coupling gear arrangement (46), which is connected to the first torque-transmitting path (14) and which is in meshing engagement with the planet gears (52), and a second coupling gear arrangement (54), which is connected to the output region (22) and which is in meshing engagement with the planet gears (52), **characterized in that** at least one planet gear (52) is supported on the planet gear carrier (50) in axially movable and/or radially movable and/or tiltably movable fashion in such a way that at least one support element (70) which supports a planet gear (52) on the planet gear carrier (50) is axially movable and/or radially movable and/or tiltably movable relative to the planet gear carrier (50).

2. Rotary vibration damping arrangement according to Claim 1, **characterized in that** the phase shift arrangement (18) comprises a vibratory system (26) with a primary side (32) and with a secondary side (40) which is rotatable relative to the primary side (32) about an axis of rotation (A) counter to the action of a spring arrangement (36, 42), wherein preferably, the vibratory system (26) comprises at least two vibration dampers (28, 30) which act in series with respect to one another and/or at least two vibration dampers which act in parallel with respect to one another, each with a primary side (32, 38) and with a secondary side (34, 40) rotatable relative to said primary side.

3. Rotary vibration damping arrangement according to Claim 1 or 2, **characterized in that** the first coupling gear arrangement (46) in conjunction with the planet gears (52) and the second coupling gear arrangement (54) in conjunction with the planet gears (52) provide mutually different transmission ratios.

4. Rotary vibration damping arrangement according to Claim 3, **characterized in that** the first coupling gear arrangement (46) and the second coupling gear arrangement (54) each comprise an internal-gear arrangement or sun-gear arrangement.

5. Rotary vibration damping arrangement according to Claim 2 or either of Claims 3 and 4 where referred back to Claim 2, **characterized in that** the axial and/or radial and/or tilting movement functionality is integrated into the vibratory system (26).

6. Rotary vibration damping arrangement according to Claim 5, **characterized in that** a primary side (32, 38) and a secondary side (34, 40) are axially movable and/or radially movable and/or tiltably movable relative to one another.

7. Rotary vibration damping arrangement according to one of Claims 1 to 6, **characterized in that** at least two components are connected to one another with the interposition of, and/or via, an elastic formation (62) which permits an axial movement and/or radial movement and/or tilting movement relative to one another.

8. Rotary vibration damping arrangement according to one of Claims 1 to 7, **characterized in that** the input region (12) and/or the output region (22) are/is coupled or couplable to a drive-input element or drive-output element (24) with the interposition of, and/or via, an elastic formation (62) which permits an axial movement and/or radial movement and/or tilting movement.

9. Rotary vibration damping arrangement according to Claim 7 or 8, **characterized in that** the elastic formation (62) comprises at least one elastomer material element (64; 66; 67; 68; 72) and/or at least one flex plate arrangement (78).

10. Rotary vibration damping arrangement according to one of Claims 1 to 9, **characterized in that** at least two components (110, 112) are connected to one another such that an axial movement clearance and/or a radial movement clearance (114) and/or a tilting movement clearance is realized.

11. Rotary vibration damping arrangement according to one of Claims 1 to 10, **characterized in that** at least two components are connected to one another via a bearing arrangement (64; 66; 67; 68; 72; 74; 136) which permits an axial movement and/or radial movement and/or tilting movement relative to one another.

12. Rotary vibration damping arrangement according to Claim 11, **characterized in that** the bearing arrangement (72; 136) comprises at least one at least regionally radially elastic bearing arrangement element (72; 138; 140).

13. Rotary vibration damping arrangement according to Claim 11 or 12, **characterized in that** the bearing arrangement (74) is a rotary bearing arrangement.

14. Rotary vibration damping arrangement according to one of Claims 1 to 13, **characterized in that** the support element (70) is movable in a radial sliding guide (128, 158, 160) in the planet gear carrier (50) counter to the restoring action of at least one elastic element (166).

## Revendications

1. Agencement d'amortissement de vibrations de torsion, en particulier pour la chaîne cinématique d'un véhicule, comprenant une région d'entrée (12) et une région de sortie (22), dans lequel un premier trajet de transfert de couple (14) et, parallèlement à celui-ci, un deuxième trajet de transfert de couple (16) ainsi qu'un agencement d'accouplement (20) pour la superposition des couples guidés par les trajets de transfert de couple (14, 16), sont prévus entre la région d'entrée (12) et la région de sortie (22), un agencement de déphasage (18) étant prévu au moins dans le premier trajet de transfert de couple (14) pour produire un déphasage des défauts d'uniformité de torsion introduits par le biais du premier trajet de transfert de couple (14) par rapport aux défauts d'uniformité de torsion introduits par le biais du deuxième trajet de transfert de couple (16), une fonctionnalité de mouvement axial et/ou radial et/ou de basculement étant intégrée dans la région d'entrée (12) et/ou dans la région de sortie (22) et/ou dans le premier trajet de transfert de couple (14) et/ou dans le deuxième trajet de transfert de couple (16), et/ou la région d'entrée et/ou la région de sortie étant accouplées ou pouvant être accouplées de manière déplaçable axialement et/ou de manière déplaçable radialement et/ou de manière déplaçable par basculement à un organe d'entraînement ou à un organe de prise de force, l'agencement d'accouplement (20) comprenant un agencement d'engrenage planétaire (48), l'agencement d'engrenage planétaire (48) comprenant un porte-satellites (50) raccordé au deuxième trajet de transfert de couple (16) avec une pluralité de satellites (52) supportés à rotation sur celui-ci ainsi qu'un premier agencement de roue d'accouplement (46) relié au premier trajet de transfert de couple (14) en engagement d'engrènement avec les satellites (52) et un deuxième agencement d'accouplement (54) relié à la région de sortie (22) en engagement d'engrènement avec les satellites (52), **caractérisé en ce qu'**au moins un satellite (52) est supporté sur le porte-satellites (50) de manière déplaçable axialement et/ou radialement et/ou de manière à pouvoir basculer par le fait qu'au moins un organe de support (70) supportant un satellite (52) sur le porte-satellites (50) peut être déplacé axialement et/ou radialement et/ou de manière à pouvoir basculer par rapport au porte-satellites (50).

2. Agencement d'amortissement de vibrations de torsion selon la revendication 1, **caractérisé en ce que** l'agencement de déphasage (18) comprend un système oscillant (26) avec un côté primaire (32) et un côté secondaire (40) pouvant tourner autour d'un axe de torsion (A) par rapport au côté primaire (32) à l'encontre de l'action d'un agencement de ressort (36, 42), le système oscillant (26) comprenant au moins deux amortisseurs d'oscillations (28, 30) agissant en série l'un par rapport à l'autre et/ou au moins deux amortisseurs d'oscillations agissant en parallèle l'un par rapport à l'autre, à chaque fois avec un côté primaire (32, 38) et un côté secondaire (34, 40) pouvant tourner par rapport à celui-ci.

3. Agencement d'amortissement de vibrations de torsion selon la revendication 1 ou 2, **caractérisé en ce que** le premier agencement de roue d'accouplement (46) en liaison avec les satellites (52) et le deuxième agencement de roue d'accouplement (54) en liaison avec les satellites (52) fournissent des rapports de démultiplication différents l'un de l'autre.

4. Agencement d'amortissement de vibrations de torsion selon la revendication 3, **caractérisé en ce que** le premier agencement de roue d'accouplement (46) et le deuxième agencement de roue d'accouplement (54) comprennent chacun un agencement de couronne dentée ou un agencement de roue solaire.

5. Agencement d'amortissement de vibrations de torsion selon la revendication 2 ou selon l'une quelconque des revendications 3 et 4, dans la mesure où elle se rapporte à la revendication 2, **caractérisé en ce que** la fonctionnalité de mouvement axial et/ou radial et/ou de basculement est intégrée dans le système oscillant (26).

6. Agencement d'amortissement de vibrations de torsion selon la revendication 5, **caractérisé en ce qu'**un côté primaire (32, 38) et un côté secondaire (34, 40) peuvent être déplacés axialement et/ou radialement et/ou par basculement l'un par rapport à l'autre.

7. Agencement d'amortissement de vibrations de torsion selon l'une quelconque des revendications 1 à 6, **caractérisé en ce qu'**au moins deux composants sont connectés l'un à l'autre par interposition et/ou par l'intermédiaire d'une formation élastique (62) autorisant un mouvement axial et/ou radial et/ou de basculement l'un par rapport à l'autre.

8. Agencement d'amortissement de vibrations de torsion selon l'une quelconque des revendications 1 à 7, **caractérisé en ce que** la région d'entrée (12) et/ou la région de sortie (22) sont accouplées ou peuvent être accouplées à un organe d'entraînement ou un organe de prise de force (24) par interposition et/ou par l'intermédiaire d'une formation élastique (62) autorisant un mouvement axial et/ou radial et/ou de basculement.

9. Agencement d'amortissement de vibrations de torsion selon la revendication 7 ou 8, **caractérisé en ce que** la formation élastique (62) comprend au moins un élément en matériau élastomère (64 ; 66 ; 67 ; 68 ; 72) et/ou au moins un agencement de plaque flexible (78).

10. Agencement d'amortissement de vibrations de torsion selon l'une quelconque des revendications 1 à 9, **caractérisé en ce qu'**au moins deux composants (110, 112) sont reliés l'un à l'autre en générant un jeu de mouvement axial et/ou un jeu de mouvement radial (114) et/ou un jeu de mouvement de basculement l'un avec l'autre.

11. Agencement d'amortissement de vibrations de torsion selon l'une quelconque des revendications 1 à 10, **caractérisé en ce qu'**au moins deux composants sont connectés l'un à l'autre par l'intermédiaire d'un support sur palier (64 ; 66 ; 67 ; 68 ; 72 ; 74 ; 136) autorisant un mouvement axial et/ou un mouvement radial et/ou un mouvement de basculement l'un par rapport à l'autre.

12. Agencement d'amortissement de vibrations de torsion selon la revendication 11, **caractérisé en ce que** le support sur palier (72 ; 136) comprend au moins un élément de support sur palier (72 ; 138 ; 140) au moins en partie radialement élastique.

13. Agencement d'amortissement de vibrations de torsion selon la revendication 11 ou 12, **caractérisé en ce que** le support sur palier (74) est un support sur palier pivotant.

14. Agencement d'amortissement de vibrations de torsion selon l'une quelconque des revendications 1 à 13, **caractérisé en ce que** l'organe de support (70) peut être déplacé dans un guide coulissant radial (128, 158, 160) dans le porte-satellites (50) à l'encontre de l'effet de rappel d'au moins un organe élastique (166).
